# EUROPÄISCHE PATENTANMELDUNG

(11) **EP 1 147 839 A2**
(43) Veröffentlichungstag der Anmeldung: **24.10.2001**
(21) Anmeldenummer: 01100015.5
(22) Anmeldetag: 03.01.2001
(51) Int. Cl.: B23B 31/107

(54) **Schnellwechselwerkzeughalter**

(30) Priorität: 03.01.2000 DE 10000033
(71) Anmelder: Alfred Raith GmbH, 68766 Hockenheim (DE)
(72) Erfinder: Hynek, Vesely, CZ-47006 Ceska Lipa (CZ)
(74) Vertreter: Kammer, Arno, Dipl.-Ing.

(57) **Zusammenfassung**

Es wird eine Schnellwechselaufnahme zum schnellen Verbinden von Bearbeitungswerkzeugen mit einem Antriebsmotor beschrieben.

Die Aufnahme ist derart gestaltet, daß eine Federkraft ein Betätigungsteil in einer Stellung hält, in der dieses Arretierkörper in Ausnehmungen im Werkzeugschaft drückt. Wird das Betätigungsteil in Richtung zum Werkzeug hin verschoben, so lassen in den Betätigungsteilen vorhandene Ausweichbereiche den wenigstens einen Arretierkörper ausweichen, wodurch das Werkzeug freigegeben wird.

## Beschreibung

Die Erfindung betrifft eine Schnellwechselaufnahme mit den Merkmalen des Oberbegriffs des Anspruchs 1.

Schnellwechselaufnahmen werden benutzt, um z. B. einen Blechbohrer oder dgl. mit einem Antrieb, z. B. einem Antriebsmotor zu verbinden, wobei ein schnelles Verbinden und Demontieren des Werkzeugs mit bzw. von dem Motor erwünscht ist.

Eine Schnellwechselaufnahme mit den Merkmalen des Oberbegriffs des Anspruchs 1 ist aus der DE 4422342A1 und zwar aus deren Fig. 15 und 16 bekannt. Dort ist eine Schiebehülse vorgesehen, die entgegen der Kraft einer Schraubenfeder in Richtung vom Werkzeug weg verschoben werden kann. Nach dem Verschieben können Arretierkugeln radial ausweichen und das Werkzeug kann eingeschoben werden. Durch Loslassen der Schiebehülse werden die Kugeln radial nach innen gedrückt und rasten bei richtiger Ausrichtung des Werkzeugschafts in Ausnehmung des Schafts ein und arretieren das Werkzeug.

In der genannten Schrift wird bemängelt, daß beim Arbeiten mit dem Werkzeug entstehende Späne die Schiebehülse anheben und das Werkzeug ungewollt lösen können. Deshalb wird dort ein anderer Lösungsweg mit einer Verdrehung der Schiebehülse vorgeschlagen.

Der Erfindung liegt die Aufgabe zu Grunde, eine Schnellwechselaufnahme mit den Merkmalen des Oberbegriffs des Anspruchs 1 zu schaffen, die den Nachteil der Gefahr des unerwünschten Lösens der Verbindung nicht aufweist.

Gelöst wird diese Aufgabe durch die Merkmale des Patentanspruchs 1.

Die Unteransprüche beinhalten Weiterbildungen und Ausgestaltungen der Erfindung.

Anhand der Zeichnung werden Ausführungsbeispiele der Erfindung erläutert. Es zeigen:
- Fig. 1: einen Schnitt durch eine Schnellwechselaufnahme mit zwei Arrettierkörpern
- Fig. 2: einen zweiten Schnitt durch die gleiche Aufnahme, die gegenüber Fig. 1 um einen Winkel versetzt ist und ein eingesetztes Werkzeug aufweist.
- Fig. 3: eine Explosionszeichnung der erfindungsgemäßen Aufnahme in perspektivischer Darstellung.
- Fig. 4 bis 5: xein weiteres Ausführungsbeispiel

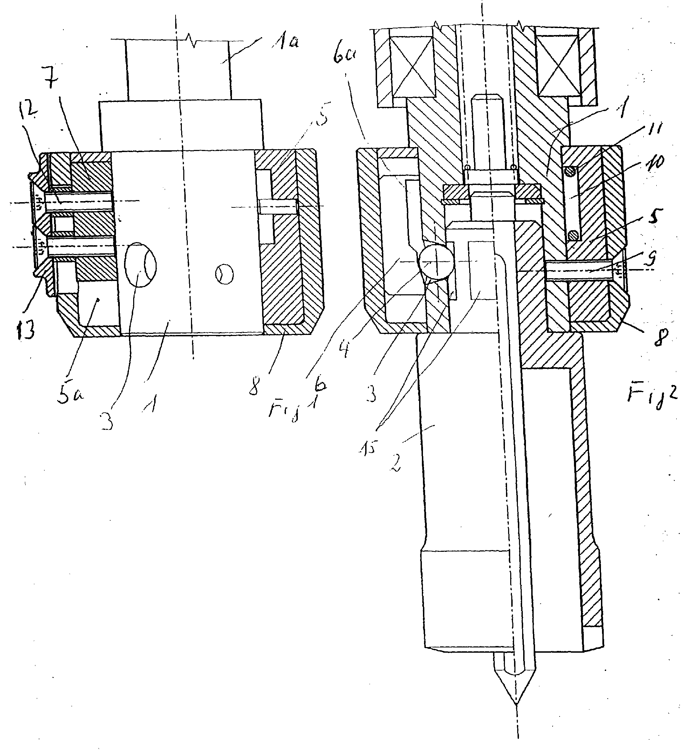

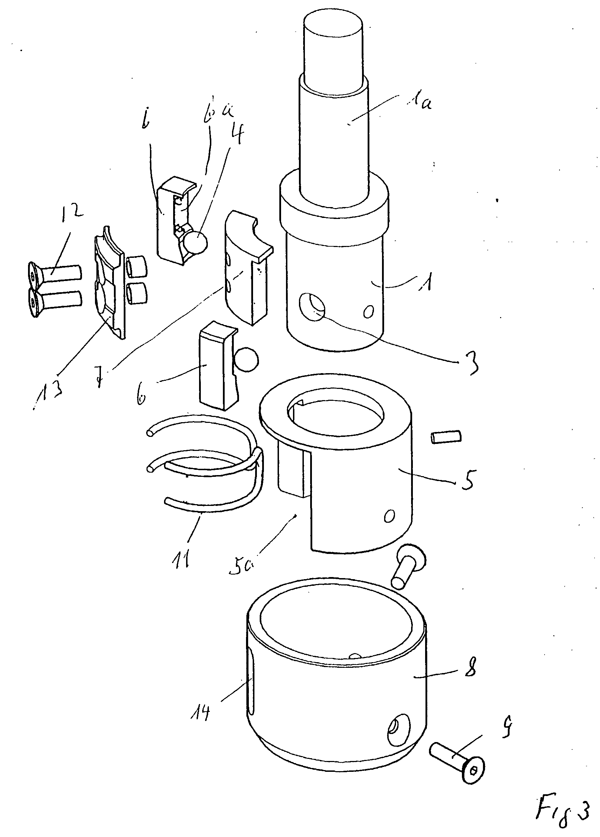

In Fig. 1 ist zentral eine Hülse 1 gezeigt, die mit ihrem nur teilweise dargestellten Schaft 1a mit dem Antriebsmotor verbunden wird. Diese Teile sind auch in Fig. 3 mit 1 bzw. 1a bezeichnet. In die Hülse 1 wird von unten das Werkzeug 2 eingeschoben. (Fig.2) Die Hülse 1 weist zwei winkelversetzt angeordnete Öffnungen 3 auf, in denen Kugeln 4 untergebracht sind. Die Öffnungen 3 sind so ausgebildet, daß Kugelabschnitte ins Innere der Hülse hinein ragen, daß aber die ganzen Kugeln nicht hindurch passen.

Die Hülse 1 ist von einer Teilschale 5 umgeben. In den Sektor 5a der Teilschale 5 passen zwei Betätigungsteile 6 mit je einem Ausweichbereich 6a. Zwischen den beiden Betätigungsteilen 6 ist ein Mitnehmerteil 7 angeordnet. Umgeben ist der Aufbau von einem Gehäuse 8. Die Teile 1, 5 und 9 sind durch Schrauben 9 miteinander verbunden. In einer auf dem Innenumfang der Teilschale 5 angebrachten Aussparung 10 sind zwei etwa U-förmige Biegefedern 11 eingespannt, deren freie Enden auf die Betätigungsteile 6 einwirken und diese in die in Fig. 2 gezeigte Stellung bringen, also eine Kraft nach oben auf diese ausüben. Das Mitnehmerteil 7 ist mittels Schrauben 12 mit einem Betätigungsschieber 13 verbunden; die Verschiebung in axialer Richtung ist durch ein Langloch 14 möglich. Die Betätigungsteile 6 werden durch die Federn 11 in der in Fig. 2 gezeigten Stellung gehalten in der die Arretierkugeln 4 nach innen gedrückt sind und in Ausnehmungen 15 des Werkzeugs hinein ragen und das Werkzeug 2 arretieren. Die Werkzeuge haben üblicherweise zwei als Flächen ausgebildete Ausnehmungen. Hierdurch ist das arretierte Werkzeug axial um einen kleinen Weg verschiebbar und um einen kleinen Winkelbetrag verdrehbar. Es ist zur Vermeidung dieses Nachteils günstig am Werkzeugschaft zusätzlich wenigstens eine flache Bohrung (Senkung) anzubringen, in die dann wenigstens eine Kugel 4 einrastet. Dann ist das Werkzeug starr gekuppelt.

Soll das Werkzeug entnommen oder gewechselt werden, wird der Betätigungsschieber 13 nach unten geschoben. Der Betätigungsschieber 13 verschiebt das Mitnehmerteil 13 nach unten, welches seinerseits die Betätigungsteile 6 gegen die Kraft der Federn mitnimmt. Stehen die Ausweichbereiche 6a den Kugeln 4 gegenüber, können diese nach außen ausweichen und das Werkzeug ist entkoppelt. In dieser Stellung der Betätigungsteile 6 wird auch das Werkzeug 2 gekuppelt.

Es sei noch erwähnt, daß trotz der Verwendung von zwei Arretierkugeln auch eine Rastung möglich ist, wenn nur eine Ausnehmung 15 vorgesehen ist oder verwendet wird.

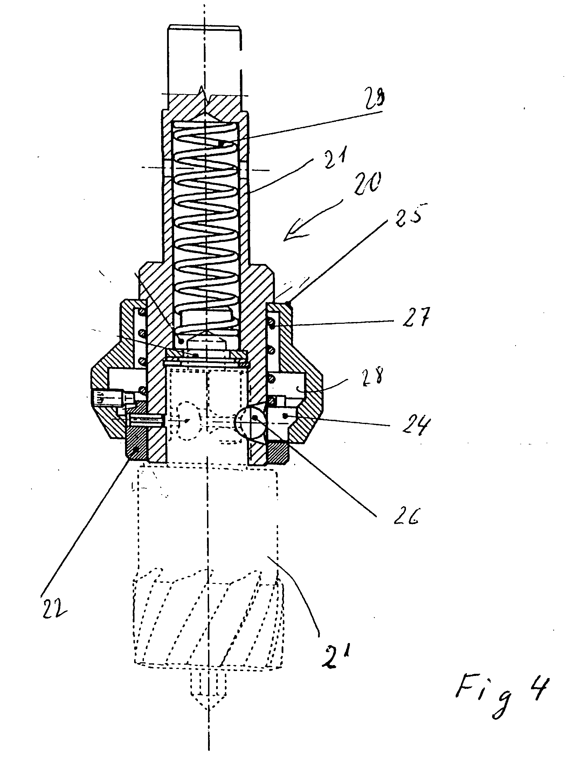

Fig. 4 zeigt einen Schnitt durch eine etwas anders gestaltete Schnellwechselaufnahme 20, wobei ein damit zu verbindendes Werkzeug 2' gestrichelt eingezeichnet ist. Der Hülse 1 der Fig. 1 und 3 entspricht hier die Hülse 21. Diese ist am unteren Ende mit einem Führungsring 22 verbunden, der in Fig. 4a perspektivisch herausgezeichnet ist. Er weist zwei Aussparungen 23 auf, in die Drucksteine 24 entsprechend Fig. 4b eingesetzt werden. Einer dieser Drucksteine 24 ist in Fig. 4 erkennbar. Er wird durch einen Betätigungsring 25 nach innen gedrückt, wodurch ein hier als Kugel 26 ausgebildeter Arretierkörper in entsprechende Öffnungen der Hülse 21 gedrückt wird. Die aus der Hülse 21 herausstehende Kugelkalotte ist in einer kleinen Vertiefung im Schaft des Werkzeugs 2' eingerastet und hält damit das Werkzeug 2' fest. Auf dem Führungsring 22 stützt sich eine Schraubenfeder 27 ab, deren Federkraft auf den Betätigungsring 25 einwirkt und diesen in der gezeigten Stellung mit Werkzeugverriegelung hält. Soll das Werkzeug 21 gelöst werden, so wird der Betätigungsring von Hand entgegen der Kraft der Feder 27 nach unten gezogen. Dann kann der Druckstein 24 in den freien Raum 28 ausweichen und die Kugel 26 kann radial nach außen ausweichen, wodurch die Arretierung zwischen der Aufnahme 20 und dem Werkzeug 2' gelöst wird und das Werkzeug entnommen werden kann. Zur Kopplung des Werkzeugs 2' mit der Aufnahme 20 wird ebenfalls der Betätigungsring 25 nach unten gezogen, der Schaft des Werkzeug 21 eingeführt und die Betätigung des Rings 25 beendet. Vorzugsweise weist der Werkzeugschaft in den, den Kugeln 26 entsprechenden Stellen, Flächen auf, die das Einführen erleichtern. In den Flächen oder seitlich davon befinden sich dann die Vertiefungen, die zur Arretierung benötigt werden, wobei im letzten Fall noch eine Verdrehung des Werkzeugs 21 relativ zur Aufnahme 20 notwendig ist.

Die Feder 29 hat mit der eigentlichen Arretierung der Aufnahme nichts zu tun. Sie dient zum Betätigen des Auswerferstifts.

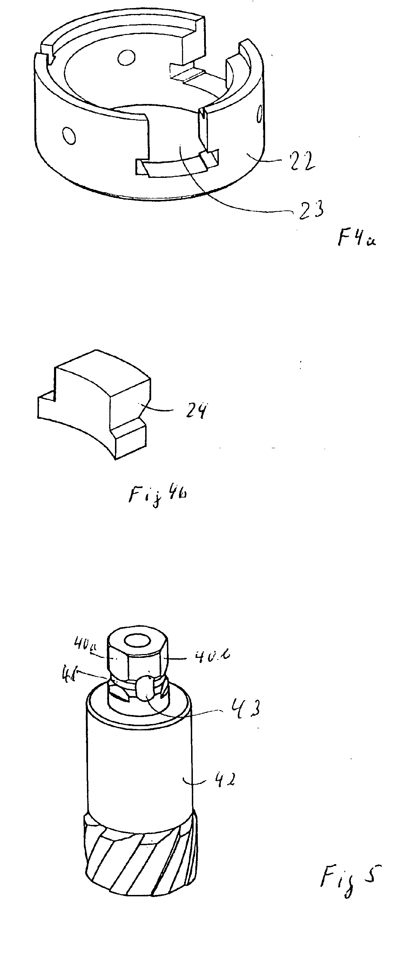

Fig. 5. zeigt in perspektivischer Darstellung ein Werkzeug, das zum Arretieren noch verdreht werden muss. Es wird so eingeführt, dass die beiden Arretierkörper auf den Flächen 40a und 40b des Werkzeugschafts entlang gleiten bis eine Rille 41 im Schaft erreicht ist. Danach wird das Werkzeug 42 gedreht, bis die Kugeln in Vertiefungen 43 einrasten, wodurch die Verriegelung erreicht ist.

## Patentansprüche

1. Schnellwechselaufnahme zum Verbinden eines Antriebs mit einem Bearbeitungswerkzeug (2) bei der wenigstens ein in einer Hülse (1, 21) geführter Arretierkörper (4, 26) durch diese hindurch in eine Ausnehmung (15) im Werkzeugschaft gedrückt wird, wobei dieser Druck durch ein entgegen einer Federkraft (11, 27) axial verschiebbares Betätigungsteil (6, 25) ausgeübt wird, das wenigstens einen Ausweichbereich (6a, 28) aufweist, wodurch der wenigstens eine Arretierkörper (4, 26)nach dem Verschieben ausweichen kann und damit das Werkzeug freigibt, dadurch gekennzeichnet, daß das Betätigungsteil (6, 25) derart ausgebildet ist, daß es beim Verschieben in Richtung zum Werkzeug (2, 2') hin das Werkzeug (2, 2') freigibt und daß am Umfang der Hülse (1, 21) eine Feder (11, 27) vorgesehen ist, die auf das Betätigungsteil (6) eine in Richtung vom Werkzeug (2, 2') weg gerichtete Federkraft ausübt.

2. Schnellwechselaufnahme nach Anspruch 1, dadurch gekennzeichnet, dass das Betätigungsteil (6) nur einen Teil des Umfangs der Hülse (1) abdeckt und dass die Feder eine Biegefeder (11) ist.

3. Schnellwechselaufnahme nach Anspruch 1 oder 2, die in einem Gehäuse (8) untergebracht ist, dadurch gekennzeichnet, dass außerhalb des Gehäuses (8) ein Betätigungsschieber (13) vorgesehen ist, der mit dem wenigstens einen Betätigungsteil (6) in Verbindung steht und dass im Gehäuse ein Langloch vorgesehen ist, entlang dem der Betätigungsschieber (13) zusammen mit dem Betätigungsteil (6) axial verschiebbar ist.

4. Schnellwechselaufnahme nach einem der Ansprüche 1 bis 3, dadurch gekennzeichnet, dass bei Verwendung von zwei Betätigungsteilen (6) ein Mitnehmerteil (7) zwischen den Betätigungsteilen (6) angeordnet ist, das mit dem Betätigungsschieber (13) verbunden ist und dass das Mitnehmerteil (7) nur beim Verschieben des Betätigungsschiebers (7) zum Werkzeug hin die Betätigungsteile (6) mitnimmt.

5. Schnellwechselaufnahme nach einem der Ansprüche 1 bis 4, dadurch gekennzeichnet, dass die Biegefeder(n) (11) u-förmig ausgebildet ist (sind).

6. Schnellwechselaufnahme nach einem der Ansprüche 3 bis 5, dadurch gekennzeichnet, dass die Hülse (1) von einer Teilschale (5) umgeben ist, die eine Aussparung (10) aufweist, in der die Federn (11) eingespannt sind und dass die Betätigungsteile (6) zusammen mit dem Mitnehmerteil (7) die Teilschale (5) zur Vollschale ergänzen.

7. Schnellwechselaufnahme nach Anspruch 1, dadurch gekennzeichnet, dass das Betätigungsteil ein Ring (25) ist, dass auf diesen eine die Hülse (21) umgebende Druckfeder (27) einwirkt und dass mit der Hülse (21) ein Führungsring (22) verbunden ist, der wenigstens eine Aussparung (23) zur Aufnahme eines Drucksteins (24) aufweist, wobei der Betätigungsring (25) in seiner Normalstellung den wenigstens einen Druckstein (24) auf den wenigstens einen Arretierkörper (26) aufdrückt und in der nach dem Verschieben erreichten Stellung den Druckstein (24) und den Arretierkörper (26) radial ausweichen lässt.
